# EUROPEAN PATENT APPLICATION

(11) **EP 2 037 059 A1**
(43) Date of publication of application: **18.03.2009**
(21) Application number: 07253668.3
(22) Date of filing: 17.09.2007
(51) Int. Cl.: E04H 4/00, A01K 63/00

(54) **Preformed foldable pond liner system and pond building method**

(71) Applicant: Louis Cevoli, New York 11725 (US)
(72) Inventor: Louis Cevoli, New York 11725 (US)
(74) Representative: Maggs, Michael Norman

(57) **Abstract**

A preformed, foldable pond liner system provides a lining system for use in small backyard ponds. A soft, pliable and flexible polyvinyl chloride (PVC) insert is used instead of rigid polypropylene. This soft insert is foldable to save space on retailers shelves. Also, the soft, flexible liner will more easily conform to the excavated ground and is more forgiving of voids or high spots than its rigid type conventional counterpart. Finally, the liner permits more of a free form arrangement and will accommodate special features of the landscaping being installed nearby. A foldable template is provided to assist the user with general excavation, the template having a variety of shapes and dimensions, including symmetrical and asymmetrical geometric shapes.

## Description

### BACKGROUND OF THE INVENTION

### 1. Field of the Invention

The present invention relates generally to pond liners and, more particularly, to a preformed, foldable pond liner system.

### 2. Description of the Related Art

Backyard ponds are a popular addition used as a landscaping enhancement. Such ponds provide a focal point for backyard landscapes and offer a haven for fish, reptiles, birds, plants and other animal and plant life. Ponds may also provide a source of relaxation, wherein the pond has a fountain, waterfall or other source of running water.

Many ponds are installed using rigid, preformed liners. However, such pond liners suffer from several deficiencies. First, the rigidness of the liners results in the liner being difficult to manufacture and transport between locations. In addition, commercial outlets are reluctant to stock several varieties of pond liner. In some instances, the liners are too large. In other instances, the varied shapes are not conducive to stacking or nesting. Finally, the specific dimensions of liner requires a purchaser to prepare and excavate the ground to the specific dimensions, otherwise the liner will not fit properly. Thus, customized shapes or sizes and variations within a style are discouraged because of the aforementioned difficulty.

A search of the prior art did not disclose any patents that read directly on the claims of the instant invention; however, the following references were considered related.

U.S. Patent No. 5,529,438 and U.S. Patent No. 5,350,255 each describes a geosynthetic clay liner with modified edges for improved sealing.

U.S. Patent No. 6,041,738 describes fish pond methods and systems.

U.S. Patent No. 4,535,015 describes weft inserted warp knit construction.

U.S. Patent No. 4,514,463 describes laminate suitable as sealing liner for liquid containers.

And, U.S. Patent No. 4,035,543 describes laminate suitable as hydrocarbon resistant pond liner.

Accordingly, there is a need for a liner system for ponds that is easily transported between locations, easily installed into an excavated area, and tolerates minor variations that overcome the aforementioned deficiencies. The development of the present invention fulfills this need.

### SUMMARY OF THE INVENTION

It is therefore an object of the present invention to provide an improved pond liner system.

It is a feature of the present invention to provide an improved preformed and foldable pond liner system.

Briefly described according to the preferred embodiment of the present invention, a preformed, foldable pond liner system provides a lining system for use in small backyard ponds. After installation it appears like a conventional pond, which is using a conventional liner made from rigid High Density Polyethylene. However, by contrast a soft flexible polyvinyl chloride (PVC) insert is used. This soft insert is foldable to save space on retailers shelves. Also, the soft, flexible liner will more easily conform to the excavated ground and is more forgiving of voids or high spots than its rigid type conventional counterpart. Finally, the liner permits more of a free form arrangement and will accommodate special features of the landscaping being installed nearby. A foldable underlayment template is provided to assist the user with general excavation.

An advantage of the present invention is that it can provide an easy and adaptable method of creating an architectural landscape type pond.

Further, the present invention can allow for minimized packaged volume, thereby making transportation, shipping, and retailing more space efficient.

The use of the preformed foldable small pond liner system allows for the construction of small architectural type ponds in a manner which is quick, easy and effective, but without the disadvantages of the rigid type pond liner.

### BRIEF DESCRIPTION OF THE DRAWINGS

The advantages and features of the present invention will become better understood with reference to the following more detailed description and claims taken in conjunction with the accompanying drawings, in which like elements are identified with like symbols, and in which:
FIG. 1 is a perspective view of a pond template incorporated into a pond liner system defined by the present application;
FIG. 2 is a perspective view of a user excavating the specified area with a hand tool;
FIG. 3 is a perspective view of the template placed into the bottom of the basin formed;
FIG. 4 is a perspective view of a pond liner as part of the pond liner system;
FIG. 5 is a perspective view of the pond liner installed into the basin excavated in accordance with the template depicted in FIG. 1; and
FIG. 6 is a perspective view of a finished pond constructed in accordance with the pond template and pond liner provided as part of the pond liner system.

### DESCRIPTION OF THE PREFERRED EMBODIMENTS

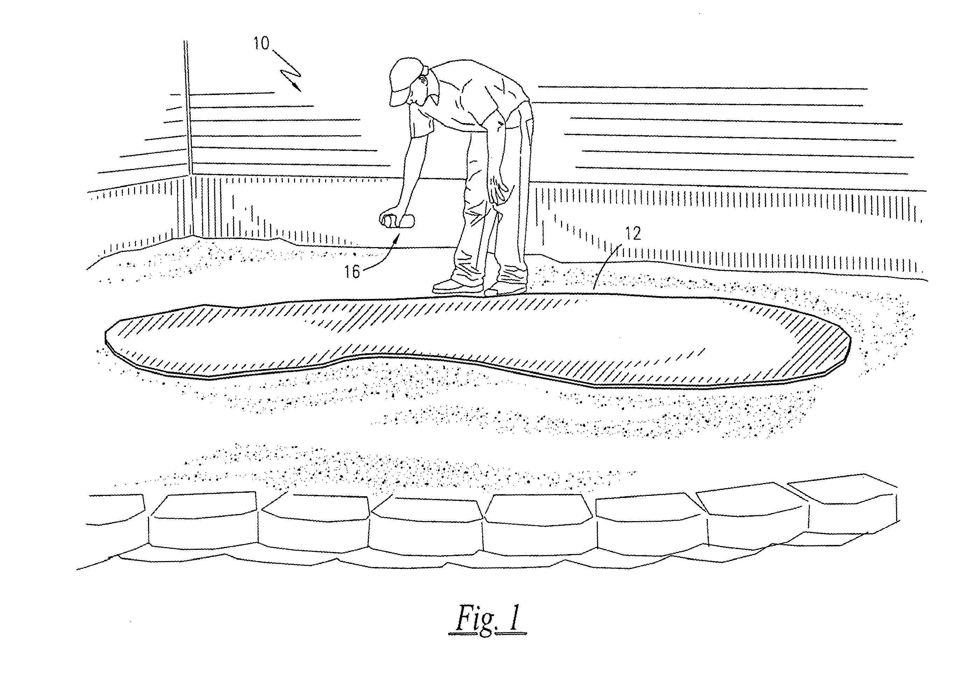

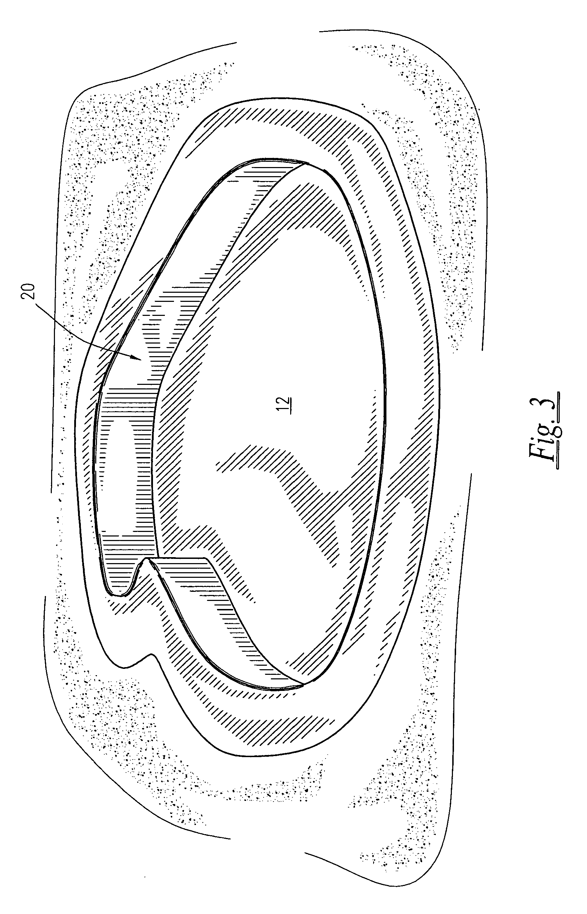

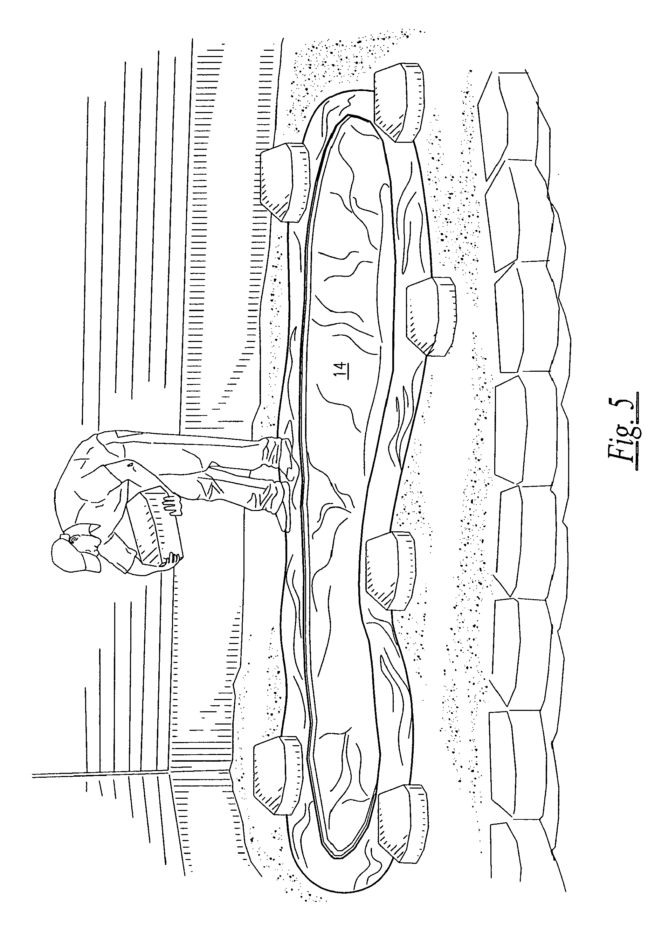

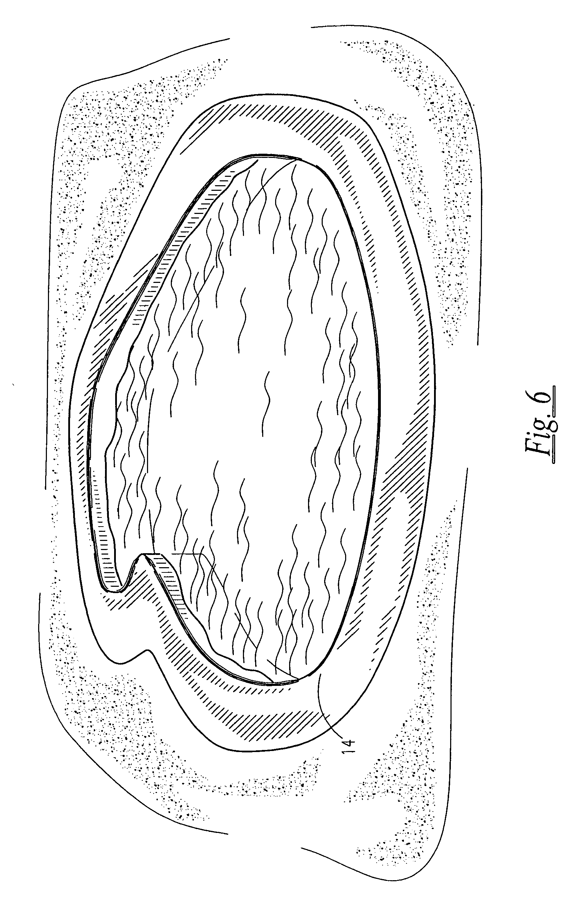

The best mode for carrying out the invention is presented in terms of its preferred embodiment, herein depicted within the Figures 1-6.

### 1. Detailed Description of the Figures

Referring now to FIG. 1 through 6, a pond liner system 10 is depicted in accordance with a preferred embodiment of the present invention. The system 10 comprises a template 12 for creating a perimeter of a basin or bowl that will later aid in forming the pond. After marking the area in accordance with the template 12, a user excavates the area using a hand tool or mechanical tool until the appropriate dimensions of the basin or bowl are generated. The system 10 also comprises a pond liner 14 approximately corresponding to the linear and volumetric dimensions of the template 12 provided. Variations of the linear and volumetric dimensions are envisioned and tolerated within the system 10, resulting in a system 10 that is easily generated and adapted during creation and/or installation of the system 10.

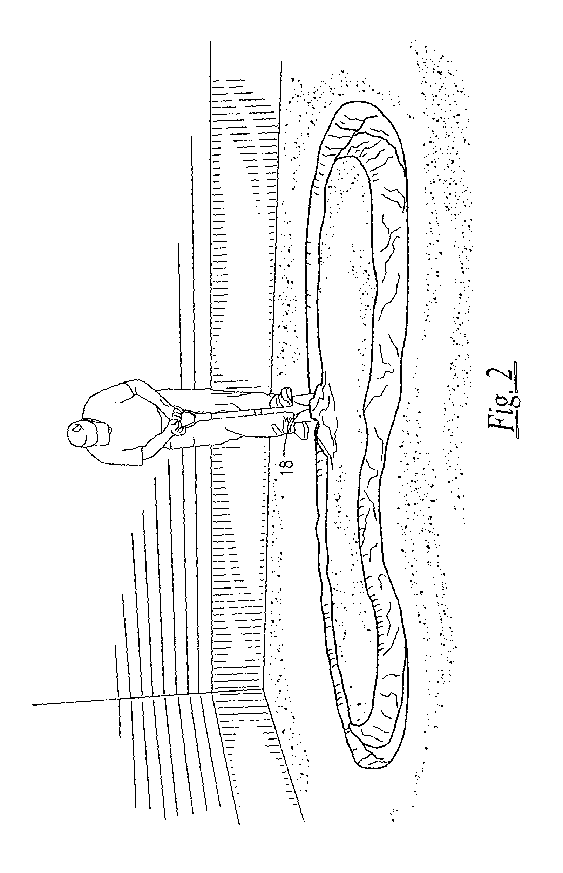

The template 12 may be provided in a variety of silhouettes, including the dumbbell shape depicted in FIG. 1, though many other shapes are envisioned, including circular shapes, kidney shapes, and other symmetrical or asymmetrical geometric formations. The user marks the ground or area with a marking means or marking tool 16, including paint (brush application, aerosol or pneumatic power application), chalk, or means for scoring the ground, including means capable of making visual marks into the ground or area (such as any elongated item, including a stick, post, rod, plank or other similar means). In FIG. 2, a hand tool (a spade, shovel or varying sizes, and a pickax) 18 is used to excavate the ground to create a basin or bowl 20 suitable for placing the pond liner 14 therein. The depth of the basin 20 may vary from user to user, so long as the depth does not exceed the amount of material provided in each system 10. A mechanical tool is also envisioned, such as a back hoe or other similar device.

The liner 14 is manufactured or fabricated from polyvinyl chloride (PVC), which is a soft, flexible and pliable material suitable for manipulating the liner 14 to conform to a void or hole 20 that may have minor imperfections or surface irregularities. PVC is durable, and is capable of withstanding significant forces, pressures and abrasions or friction that may be generated during installation and/or use. In contrast, polyethylene is the material predominantly used in the manufacture of preformed pond liners. Polyethylene is a rigid material that is not flexible or pliable, thus the polyethylene based pond liners cannot be manipulated or made to conform to the imperfections and/or surface irregularities anticipated. Although polyethylene is durable and capable of withstanding the use described above, polyethylene is too rigid for use in the system 10 described by this application. Polyethylene, and other similarly rigid materials, require bending, creasing and folding of the material to achieve conformity to surface irregularities that may result in creating the pond. For these, and other reasons, the use of polyethylene and other similar materials are undesirable as the material for use in the manner described and preferred.

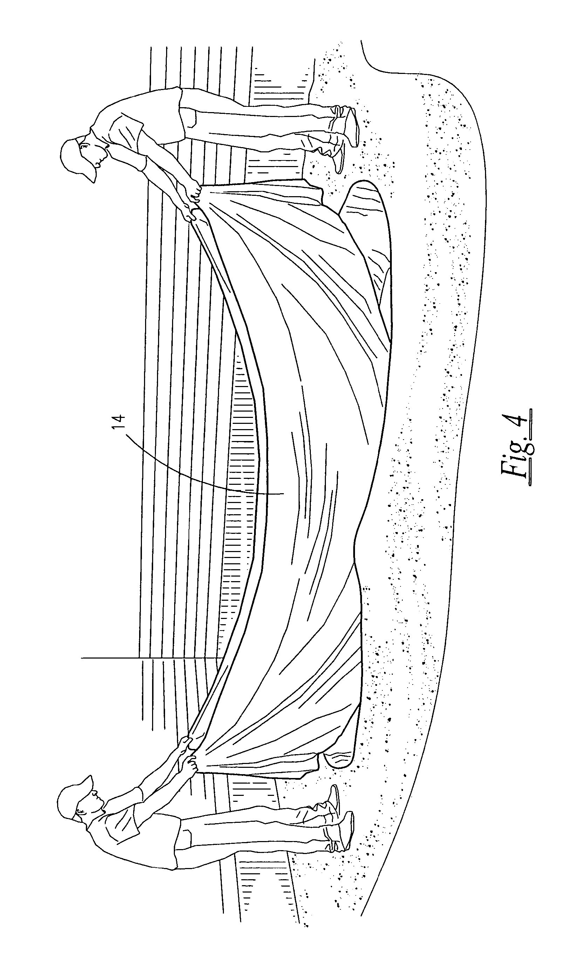

As depicted in FIG. 4, the liner 14 is lowered into the basin 20 and manipulated until the liner 14 compliments the boundaries of the basin 20 created by the user from the template 12. The flexible and pliable PVC material comprising the liner 14 permits the user / installer to conform the liner 14 to the basin 20 created without having to construct a perfect or near perfect basin 20. Thus, the use of the liner 14 reduces the need for subsequent modifications to the basin 20.

### 2. Operation of the Preferred Embodiment

A method of installing a pond liner system may be achieved by performing the following steps: placing a template 12 on an area; outlining the template 12 with a marking tool 16; removing the template12; creating a basin 20 by excavating the area using a hand tool 18 as marked by the marking tool 16; placing a liner 14 into the basin 20; securing the liner 14; and filling the liner 14 with aqueous fluid.

More specifically, a method of installing a pond liner system may be achieved by performing the following steps: leveling the ground in which the liner 14 will be installed; placing a template 12 on the area and outlining the template 12 with a marking tool 16; removing the template 12; creating a basin 20 by excavating the area using a hand tool 18 to excavate along the boundary outlined by the marking tool 16; inspecting the walls of the basin 20 to ensure the walls are level; placing the template 12 into the basin 20 to ensure that the basin 20 has the proper shape; excavating to a depth of approximately twenty (20) inches; adding two (2) inch layer of sand to the floor of the basin 20; tamping the sand and floor of the basin 20 until level; placing liner 14 within the finished basin 20 to ensure that the basin 20 has the proper shape; placing a weighted object (stones or blocks) along the perimeter of the liner 14 to secure the liner 14 in place; adjusting the liner 14 to conform to the basin 20; and filling the liner 14 with aqueous fluid.

The soil should be graded downward and away from the pond edge, by at least one (1) inch, to prevent soil and water runoff contamination. During excavation of the basin 20, if the walls of the basin 20 are damaged, the damage may be repaired by using a mixture of cement and non-organic soil (a ratio of 1.5 shovels of cement to 15 shovels of non-organic soil). A reinforcement wall is constructed and supported at the damaged portion of the wall. The mixture of cement and non-organic soil is placed at the damage (and supported by the reinforcement wall). It is advised that only six (6) inches of mixture are added at a time. The additions are tamped down and watered. Additions of the mixture are made until the desired height is reached. Afterward, wait twenty-four (24) hours before removing the reinforcement wall and support.

In summary, the preformed and foldable pond liner system is a lining system for use in small backyard ponds. The liner is fabricated from soft, flexible polyvinyl chloride (PVC), in contrast to the rigid high density polyethylene used in the manufacture of preformed pond liners. The flexibility and durability of the PVC material provides several advantages to the pond liner system disclosed in the present application. Namely, the PVC material allows the liner to be compacted or folded in manner that makes storage and shipment much more advantageous. The liner will occupy less space on the shelves or in the aisles of the commercial outlet. Additionally, the liner is much more easily conformed to the excavated area. The liner tolerates minor deviations and imperfections in the excavated area, as well. For instance, the area may have voids, impressions, or mounds that are not correctable. The present liner conforms to these imperfections much more easily than a conventional pond liner manufactured from polyethylene. Finally, the liner permits on-site modifications or adjustments to the present liner. A foldable template is provided to assist the user with the excavation of the area under consideration. The use of the preformed and foldable pond liner system allows for the construction of a small pond in a manner that is quick, easy, efficient and effective, but without the disadvantages of the rigid body of preformed pond liners.

The liner is manufactured from flexible PVC via an extrusion molding process, envisioned as a process similar to that of inflatable items or objects, such as air mattresses and pool toys, among others. Any seams generated during the fabrication of the liner are produced by a heat welding process. The relatively simple design of the liner system and the cost efficient materials used in fabrication of the liner system results in a pond liner system that is cost-effective.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents. Therefore, the scope of the invention is to be limited only by the following claims.

## Claims

1. A system for installing a pond liner comprising:
a template provided as a means to outline a perimeter of a basin, said basin is formed by excavating along said perimeter;
a pond liner provided for a placement in said basin;
a collar for overlapping said perimeter and impinging said pond liner against said basin, said collar being welded to said liner;
sand provided as a means to form a floor to said basin said sand is placed beneath said pond liner; and,
one part cement to ten parts non-organic soil, said cement and said non-organic soil is provided as a premixture to be sued to reinforce a wall of said basin.

2. The system of Claim 1, wherein said template comprises a symmetrical geometric shape.

3. The system of Claim 1, wherein said template comprises an asymmetrical geometric shape.

4. The system of Claim 1, further comprising a marking tool to outline said template, said marking tool is selected from a group consisting of paint, chalk or a means to score the ground.

5. The system of Claim 1, further comprising an excavation tool provided as a means to form a basin, said excavation tool is selected from a group consisting of a spade, a shovel, a pickax and a back-hoe.

6. The system of Claim 1, wherein said pond liner is manufactured from a pliable material comprising a polyvinyl chloride.

7. The system of Claim 1, further comprising weighted objects for a placement around an edge of said pond liner to secure its position.

8. A method of installing a pond liner system, said method comprises the steps:
leveling the ground at a location for a pond;
placing a polyvinyl chloride template across said ground;
outlining said template with a marking tool;
removing said template;
excavating along a boundary marked by said template;
placing said template in said basin to ensure a proper shape;
inspecting walls created by said excavation to ensure that a floor of said basin is level;
grading soil downwards from an edge of said pond by at least one inch;
constructing a reinforcement wall;
tamping two inches of sand at said floor of said basin;
placing a pond liner into said basin;
securing said pond liner within said basin; and,
filling said pond with an aqueous solution.

9. The method of Claim 8, wherein said excavation is accomplished to a depth of approximately twenty inches.

10. The method of Claim 8, wherein said weighted object comprises stones or blocks placed around a border of said template along said edge of said pond.

11. The method of Claim 8, wherein said pond liner is manufactured from a pliable material comprising a polyvinyl chloride.

12. The method of Claim 8, wherein said reinforcement comprises the steps:
mixing one part cement to ten parts non-organic soil;
adding six inches of mixture to said boundary at a time;
tamping said mixture down until a desired height is reached; and,
drying said mixture for at least twenty-four hours.
